**Europäisches Patentamt**

**European Patent Office**

**Office européen des brevets**

(19)

(11) Veröffentlichungsnummer: **0 579 657 B1**

(12)

# EUROPÄISCHE PATENTSCHRIFT

(45) Veröffentlichungstag der Patentschrift: **16.08.95**

(51) Int. Cl.⁶: **C10L 5/46**, C10L 5/40

(21) Anmeldenummer: **92907856.6**

(22) Anmeldetag: **07.04.92**

(86) Internationale Anmeldenummer:
**PCT/EP92/00784**

(87) Internationale Veröffentlichungsnummer:
**WO 92/18585 (29.10.92 92/27)**

(54) **BRENNSTOFFGRANULATE AUS KLÄRSCHLAMM UND VERFAHREN ZU DEREN HERSTELLUNG.**

(30) Priorität: **09.04.91 DE 4111442**

(43) Veröffentlichungstag der Anmeldung:
**26.01.94 Patentblatt 94/04**

(45) Bekanntmachung des Hinweises auf die
Patenterteilung:
**16.08.95 Patentblatt 95/33**

(84) Benannte Vertragsstaaten:
**AT BE CH DE DK ES FR GB IT LI LU NL SE**

(56) Entgegenhaltungen:
**DE-A- 3 619 725**
**GB-A- 176 053**

**ENTSORGA-MAGAZIN-ENTSORGUNGSWIRT-SCHAFT September 1990, Seiten 60 - 62;'Granulat für die Verbrennng' in der Anmeldung erwähnt**

**ULRICH LOLL 'Recycling von Klärschlamm' 1989 , EF-VERLAG , BERLIN in derAnmeldung erwähnt**

(73) Patentinhaber: **Bergwerksverband GmbH**
**Franz-Fischer-Weg 61**
**D-45307 Essen (DE)**

(72) Erfinder: **HEY, Walter**
**Ehrenaue 32**
**D-4300 Essen 1 (DE)**
Erfinder: **ROMEY, Ingo**
**Sandkamp 25**
**D-4224 Hünxe 2 (DE)**
Erfinder: **PALM, Hans, Jürgen**
**Adolfstra e 108**
**D-4330 Mülheim/Ruhr (DE)**

EP 0 579 657 B1

**Beschreibung**

Die Erfindung betrifft Brennstoffgranulate aus Klärschlamm, insbesondere für Wirbelschichtfeuerungen. Sie betrifft weiterhin Verfahren zur Herstellung solcher Granulate.

Brennstoffgranulate aus Klärschlamm sind aus der Druckschrift "Granulat für die Verbrennung", Entsorga-Magazin - Entsorgungswirtschaft, September 1990, Seiten 60 bis 62, bekannt geworden. Diese Brennstoffgranulate bestehen aus mechanisch vorentwässertem Klärschlamm, der in einem Zwangsmischer mit einem nicht näher bezeichneten Trockengut innig vermischt und dabei praktisch granuliert wird. Die erzeugte Mischung erfolgt dabei so, daß die Trockensubstanz oberhalb der Klebephase von ca. 50 % Trockensubstanz (TS) liegt, um dann störungsfrei in einem speziellen Scheibentrockner getrocknet zu werden. Das Produkt kann selbstgängig, z. B. in einem Wirbelschichtofen, verbrannt werden. Über Zusammensetzung und Eigenschaften der Trockengranulate wird nicht näher berichtet. Nachteilig ist, daß zur Erzeugung der Granulate eine thermische Trocknung erforderlich ist, nicht brennbares Trockengut den Heizwert verringert und bei teilgetrockneten Granulaten der Heizwert durch die Wasserverdampfung des Restwassers verschlechtert wird.

Aus der Druckschrift "Klärschlamm in der Bundesrepublik", Abwassertechnik, Heft 2, 1990, Seiten 71 bis 74, sind deponiefähige Granulate aus Klärschlamm bekannt, die zur Erhöhung des TS-Gehaltes mit Konditionierungsmitteln, z. B. Kalk, versetzt werden. Durch die Granulatform soll die Handhabbarkeit und die Lagerfähigkeit verbessert werden und eine Minimierung der Deponiekosten ermöglicht werden. Da durch die Verwendung von Kalk als Konditionierungsmittel bzw. Trocknungsmittel größere Kalkmengen erforderlich sind, sind diese Granulate jedoch für eine Verbrennung wegen des verringerten Heizwertes weniger gut geeignet.

Aus "Recycling von Klärschlamm" / Ulrich Loll, Berlin, EF-Verlag für Energie- und Umwelttechnik GmbH, Band 2, 1989, sind weitere Verfahren zur Herstellung von Brennstoffgranulaten bekannt:

Bei der ESCHER-WYSS Schlammtrocknung (unter 5.1.2., Seiten 32, 33) wird der Schlamm unter teilweisem Einsatz von bereits getrocknetem Material und im Trockner abgeschiedenen Staub in einem Mischer granuliert und das Feuchtgranulat über eine Dosierschnecke und eine Zellradschleuse einem Fließbetttrockner zugeführt. Die Trocknung erfolgt durch thermische Energie, die teils direkt über Wasserdampfbrüden, teils indirekt durch Sattdampf oder Thermoöl in den Fließbetttrockner eingeführt wird. Nachteilig ist der große maschinelle und energetische Aufwand zur Granulattrocknung bis zu 98 % TS.

Bei der TCW Schlammtrocknung (unter 5.1.6., Seiten 39 bis 41) wird maschinell entwässerter Schlamm mit bereits getrocknetem Material vermischt, mit einem Förderband in den inneren Zylinder eines aus drei konzentrischen Zylindern bestehenden Trommeltrockners gefördert und dort von einem mit hoher Geschwindigkeit eintretenden Heißgasstrom (400 - 500 °C) durch die drei Zylinder transportiert und getrocknet. Von dem erzeugten granulatförmigen Trockengut wird das Granulat 2 bis 4 mm aus dem System abgezogen. Das übrige Material wird in einer Mühle zerkleinert und in das System zurückgeführt. Auch bei diesem Verfahren ist ein sehr hoher maschineller und energetischer Aufwand zur Herstellung der Granulate erforderlich.

Aus Umweltmagazin, Mai 1990, Seiten 50, 51, ist ein Verfahren zur Verbrennung von Klärschlamm bekannt, bei dem der Frischschlamm mit Kalkhydrat oder Karbidschlamm konditioniert wird sowie organische Flockungsmittel und Eisen(III-) chlorid zugegeben werden. Die weitere Entwässerung erfolgt mittels Kammerfilterpressen. Anstelle von Kalkhydrat oder Karbidschlamm kann auch Elektrofilterstaub zur Konditionierung verwendet werden, der freies, unverbrauchtes Kalziumhydroxid enthält. Eine Herstellung von Brennstoffgranulaten erfolgt bei diesem Verfahren jedoch nicht. Als nachteilig bei der Verwendung von Elektrofilterstaub werden die darin enthaltenen Schwermetalle angesehen, die eine Sondermüllentsorgung bedingen.

Der vorliegenden Erfindung liegt die Aufgabe zugrunde, unter Vermeidung der Nachteile der bekannten Verfahren Brennstoffgranulate aus Klärschlämmen vorzuschlagen, die hinsichtlich ihrer Zusammensetzung und ihrer Eigenschaften optimiert sind und die ohne einen hohen maschinellen und energetischen Aufwand hergestellt werden können und die sich insbesondere für die Verbrennung in der Wirbelschicht eignen.

Zur Lösung dieser Aufgabe werden Brennstoffgranulate vorgeschlagen, deren Zusammensetzung und Eigenschaften in Anspruch 1 niedergelegt sind.

Eine Weiterbildung der Brennstoffgranulate ist in Unteranspruch 2 enthalten.

Die erfindungsgemäße Aufgabe wird hinsichtlich vorteilhafter Herstellungsverfahren der Brennstoffgranulate durch die Merkmale der Ansprüche 3 bis 8 gelöst.

Die erfindungsgemäßen Brennstoffgranulate aus Klärschlämmen stellen überraschenderweise Brennstoffe dar, die sich durch eine vorzügliche Handhabbarkeit auszeichnen, da sie kaum Staub enthalten oder beim Handhaben freisetzen. Wegen ihrer durch die rundliche Kornform bedingten Rieselfähigkeit sind sie optimal für Lagerung, Transport und Brennstoffdosierung geeignet. Ihre Verbrennung ist umweltfreundlich sowohl hinsichtlich der anfallenden Rauchgase als auch der anfallenden festen Rückstände.

Die erfindungsgemäßen Brennstoffgranulate aus Klärschlämmen können in Wirbelschichtfeuerungen ohne zusätzliche Trägerstoffe und ohne Zusatzbrennstoffe verwendet werden, da sie ein selbstgängiger Brennstoff sind. Bereits die feuchten Brennstoffgranulate mit einem vergleichsweise hohen Wassergehalt von bis zu 47 % haben einen Heizwert, der mit getrockneten Klärschlämmen vergleichbar ist. Diese feuchten Brennstoffgranulate können somit unmittelbar in vorhandenen Klärschlammverbrennungsanlagen verbrannt werden, ohne daß bauliche Veränderungen im Ofen- und Abhitzesystem vorgenommen werden müssen. Luftgetrocknet erreichen sie als trockene Brennstoffgranulate einen Heizwert, der mit trockener Braunkohle vergleichbar ist

Für die Herstellung der erfindungsgemäßen Brennstoffgranulate sind keine aufwendigen Sondermaschinen und -einrichtungen notwendig. Neben den üblichen Vorentwässerungsmethoden und -einrichtungen wird lediglich ein Granuliermischer mit Zuführungs- und Abzugsvorrichtungen benötigt sowie gegebenenfalls Einrichtungen zur Zwischenlagerung der Rohgranulate für eine Umlufttrocknung ohne Thermoenergiezufuhr.

Je nach dem TS-Gehalt des Rohklärschlammmes (Dünnschlamm) bzw. des durch Flockung und Schwerkraftfiltration vorentwässerten Klärschlammes lassen sich die feuchten Brennstoffgranulate durch entsprechende Zugaben von Konditionierungsmitteln, wie feinteilige und trockene Kohle sowie Kalk, herstellen. Eine gegebenenfalls gewünschte Trocknung ist ohne zusätzlichen energetischen Aufwand durch einfache Umlufttrocknung möglich, um dadurch zu den höherkalorigen trockenen Brennstoffgranulaten zu gelangen.

Neben Rohklärschlamm (Dünnschlamm) und durch Flockung und Schwerkraftentwässerung eingedicktem Klärschlamm lassen sich auch in Deponien oder Klärteichen abgelagerte Klärschlämme mit Restfeuchten von z. B. 70 - 80 % zu selbstgängig verbrennbaren feuchten Brennstoffgranulaten und gegebenenfalls zu höherkalorigen trockenen Brennstoffgranulaten durch einfache Umlufttrocknung verarbeiten.

Die Herstellung der Brennstoffgranulate wird zweckmäßig am Ort des Anfalls des Klärschlammes vorgenommen. Es ist aber auch denkbar, die Herstellung an einer zentralen Stelle vorzunehmen, beispielsweise im Einzugsbereich von kleineren Kläranlagen oder an dem Ort, an dem die Brennstoffgranulate der Verbrennung zugeführt werden sollen.

Eine vorzugsweise Ausgestaltung der Brennstoffgranulate aus Klärschlamm, insbesondere für Wirbelschichtfeuerungen weist folgende Zusammensetzung auf:

a) 0,86 bis 45 Gew.-% Klärschlamm-Trockensubstanz,

b) 83,74 bis 43 Gew.-% Kohlenstaub (w.f.),

c) 5,4 bis 2 Gew.-% Branntkalk

d) ≤ 10 Gew.-% Restwasser.

Eine weitere vorzugsweise Ausgestaltung der Brennstoffgranulate aus Klärschlamm, insbesondere für Wirbelschichtfeuerungen, weist folgende Zusammensetzung auf:

a) 0,8 bis 40 Gew.-% Klärschlamm-Trockensubstanz,

b) 74,4 bis 38 Gew.-% Kohlenstaub (w.f.),

c) 4,8 bis 2 Gew.-% Branntkalk und

d) ≤ 20 Gew.-% Restwasser.

Eine dritte vorzugsweise Ausgestaltung der Brennstoffgranulate aus Klärschlamm, insbesondere für Wirbelschichtfeuerungen weist folgende Zusammensetzung auf:

a) 0,4 bis 23 Gew.-% Klärschlamm-Trockensubstanz,

b) 49,3 bis 29 Gew.-% Kohlenstaub (w.f.),

c) 3,3 bis 1 Gew.-% Branntkalk,

d) ≤ 47 % Restwasser.

In Figur 1 der Zeichnung sind beispielhaft einige bevorzugte Möglichkeiten zur Herstellung der selbstgängig verbrennbaren Brennstoffgranulate aus Klärschlamm dargestellt sowie deren Weiterbildung zur höherkalorigen trockenen Brennstoffgranulaten durch einfache Umlufttrocknung.

In Figur 2 ist ein Temperaturverlauf eines Brennversuches mit feuchten Brennstoffgranulaten abgebildet.

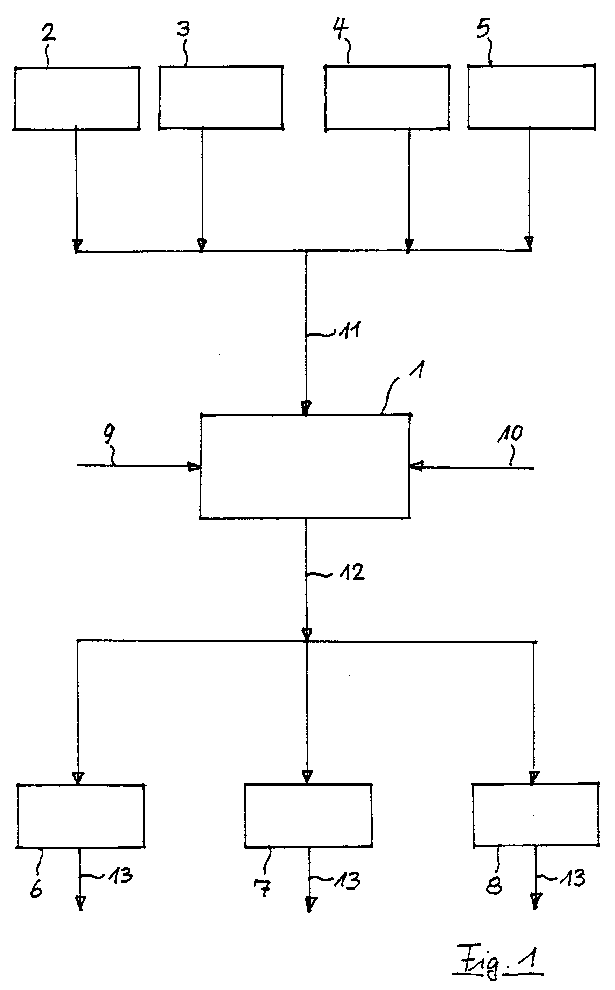

Allen aufgeführten Herstellungswegen gemeinsam ist in Fig. 1 die Granuliereinheit, nämlich der Granuliermischer 1, in dem die feuchten Brennstoffgranulate 12 hergestellt werden und der über eine Klärschlammaufgabe 11, eine Braunkohlenstaubaufgabe 9 und eine Branntkalkaufgabe 10 beschickt wird, wobei die einzelnen Zutaten so aufeinander abgestimmt werden, daß die feuchten Brennstoffgranulate 12 eine mittlere Feuchte zwischen 35 und 47 % haben.

Dabei orientiert sich die Branntkalkzugabe 10 am Schwefelgehalt des Braunkohlenstaubes 9. Die Mengenanteile an Klärschlamm 11 und an Braunkohlenstaub 9 sind in Abhängigkeit von der jeweiligen Feuchte dieser Stoffströme zu errechnen, um zu feuchten Brennstoffgranulaten mit 35 - 47 % Feuchte zu gelangen, die ausreichend fest und rieselfähig (nicht klebend und nicht schmierend) sowie selbstgängig brennfähig sind. Sie können gegebenenfalls, ohne daß thermische Trocknungsenergie aufgewendet werden muß, allein durch Umlufttrocknung, z. B. in einem Umluftsilo 6, in einem Turmrieseltrockner 7 oder in einem Trommeltrockner 8, weiterbehandelt werden, bis sie zu höherkalorigen trockenen Brennstoffgranulaten mit 20 - 10 % Feuchte oder weniger geworden sind. Falls Abwärme verfügbar ist, kann dadurch gegebenenfalls die Trocknungszeit verkürzt werden.

Der dem Granuliermischer 1 aufzugebende Klärschlamm 11 kann Dünnschlamm mit 1,5 - 8 % TS sein, der aus einem Dünnschlammbehälter 2 abgegeben wird. In diesem Falle ist der Anteil an Braunkohlenstaub entsprechend hoch zu bemessen, um zu feuchten Brennstoffgranulaten 12 zwischen 35 und 47 % Feuchte zu gelangen.

Der Dünnschlamm kann aber auch zunächst weiter entwässert werden, z. B. in einer Flockung und Filtration 3 auf 15 - 35 % TS oder einer Schwerkraftentwässerung 4 auf 15 - 25 % TS, bevor er in den Granuliermischer 1 aufgegeben wird. In diesen Fällen wird der Zusatz von Braunkohlenstaub 9 anteilig geringer zu bemessen sein als bei Zugaben aus dem Dünnschlammbehälter 2.

Dem Granuliermischer 1 kann aber auch abgelagerter Klärschlamm aus einer Deponie oder einem Schlammteich 5 mit 20 - 35 % TS zugeführt werden. Gegebenenfalls kann durch Verwendung von speziellen zusätzlichen Entwässerungseinrichtungen bekannter Art der Trockensubstanzgehalt weiter erhöht werden.

Anstelle von Braunkohlenstaub 9 können auch Steinkohlenstaub oder andere kohlenstoffhaltige Trockenmassen, beispielsweise Holzmehl oder dergleichen, in entsprechenden Anteilen dem Granuliermischer 1 aufgegeben werden, um feuchte Brennstoffgranulate 12 zu erzeugen. Von Wichtigkeit ist dabei jedoch, daß die feuchten Brennstoffgranulate 12 ausreichend fest und rieselfähig sein müssen, um sie als selbstgängigen Brennstoff verwenden bzw. daraus durch Umlufttrocknung höherkalorige trockene Brennstoffgranulate 13 fertigen zu können.

Nachfolgend wird anhand einiger Beispiele die Herstellung von erfindungsgemäßen Brennstoffgranulaten im Einzelnen beschrieben.

Beispiel 1

Der in einer Kläranlage anfallende Schlamm mit einem Trockensubstanzgehalt von 2 % wurde unter Hinzugabe eines synthetischen organischen Flockungsmittels geflockt, durch Schwerkraftfiltration vorentwässert und anschließend durch Druckfiltration auf eine Restfeuchte von 80 % gebracht.

1,4 kg des entwässerten Klärschlammes mit einer Restfeuchte von 80 % wurden mit 1,0 kg feinteiliger trockener Braunkohle (ca. 10 % Feuchte) unter Zugabe von 5 % Branntkalk, bezogen auf die Braunkohlenmenge, in einem Granuliermischer gemischt und zu rundlichen Granulaten mit einer maximalen Korngröße von ca. 4 mm verarbeitet. Die feuchten Brennstoffgranulate waren ausreichend fest sowie rieselfähig und konnten problemlos in einem Silo gelagert werden. Sie hatten unmittelbar nach der Herstellung eine Feuchte von etwa 40 %. Nach 24 h Umlufttrocknung wurden trockene Brennstoffgranulate mit einer Feuchte von ca. 20 % und nach 60 h solche mit einer Feuchte von ca. 10 % erreicht. Bereits die feuchten Brennstoffgranulate konnten problemlos selbstgängig verbrannt werden. Die trockenen Brennstoffgranulate enthielten noch genügend Feuchtigkeit, daß auch sie praktisch ohne Staubbildung handhabbar waren.

Beispiele 2 bis 5

Zur Verbesserung der Entwässerung und Erhöhung der Filtrationsgeschwindigkeit wurde die gemäß Beispiel 1 geflockte Klärschlammsuspension zusätzlich mit Filterhilfsmittel in Form von Feststoffpartikeln (0,1 - 0,3 mm) vor der Filterung versetzt. Als Filterhilfsmittel wurden Steinkohlenstaub (Beispiel 2), Koksabrieb (Beispiel 3), Holzmehl (Beispiel 4) bzw. Braunkohlenstaub (Beispiel 5) im Verhältnis 1:1, bezogen auf die jeweilige Schlammtrockensubstanzmenge, eingesetzt. Dadurch konnte eine zusätzliche Absenkung des Wassergehalts im Filterkuchen nach der Druckfiltration um 2 - 5 %-Punkte auf 22 - 25 % TS erzielt werden. Die weitere Verarbeitung zu feuchten bzw. trockenen Brennstoffgranulaten erfolgte wie unter Beispiel 1 angegeben.

Beispiel 6

1,4 kg einer Klärschlammsuspension mit 2 % Trockensubstanz wurden ohne eine Vorentwässerung mit 2 kg trockenem Braunkohlenstaub (10 % Feuchte) und 5 % Branntkalk (bezogen auf Braunkohle) in einem

4

Granuliermischer vermischt und zu feuchten Brennstoffgranulaten verarbeitet. Die selbstgängig brennbaren Granulate hatten unmittelbar nach der Herstellung eine Restfeuchte von 44 %. Nach 60 h Lufttrocknung wurden daraus trockene Brennstoffgranulate mit einer Feuchte von ca. 20 %.

Beispiel 7

Gemäß einer weiteren Mischungsvariante wurde Braunkohlenstaub mit einer höheren Feuchte von 22 % eingesetzt. 0,8 kg einer Klärschlammsuspension mit 2 % Trockensubstanz wurden mit 2,0 kg dieses feuchteren Braunkohlenstaubes unter Zugabe von 5 % Branntkalk, bezogen auf die Braunkohlenmenge, in einem Granuliermischer vermischt und zu feuchten Brennstoffgranulaten verarbeitet. Diese brennfähigen Granulate hatten nach der Mischung 36,7 % Feuchte. Nach 24 h Lufttrocknung konnten daraus trockene Brennstoffgranulate mit ca. 18,6 % Feuchte gebildet werden.

Beispiel 8

Bereits abgelagerter Klärschlamm aus einem Klärteich mit einem Restwassergehalt von 79 % wurde zur Herstellung des Brennstoffgranulats mit Braunkohlenstaub gemischt, wobei 1,5 kg Klärschlamm aus dem Klärteich (79 % Feuchte) mit 1,0 kg Braunkohlenstaub (10 % Feuchte) unter Zugabe von 5 % Branntkalk, bezogen auf die Braunkohlenmenge, in einem Granuliermischer zu feuchten Brennstoffgranulaten verarbeitet wurden. Diese hatten unmittelbar nach der Herstellung eine Feuchte von 40,2 %. Nach 60 h Lufttrocknung sind daraus trockene Brennstoffgranulate mit einer Feuchte von 16,4 % geworden.

Beispiel 9

2,1 kg eines trockenen Steinkohlenschlamms (< 1 % $H_2O$) wurden mit 1,5 kg kommunalem Klärschlamm (80 % $H_2O$) und 5 % Branntkalk (bezogen auf Steinkohlenschlamm) in einem Granuliermischer vermischt und zu rieselfähigen, selbstgängig brennbaren, feuchten Brennstoffgranulaten verarbeitet. Diese wiesen direkt nach der Herstellung einen Feuchtegehalt von 35 % und die höherkalorigen trockenen Brennstoffgranulate nach 24 h Lufttrocknung eine Restfeuchte von < 20 % auf.

Die nach den Beispielen 1 - 9 hergestellten Brennstoffgranulate fallen nach dem Granuliervorgang als körnigrundliche Pellets mit einer durchschnittlichen Korngröße von 1 - 4 mm an. Diese feuchten Brennstoffgranulate haben einen Wassergehalt von 35 - 47 % (65 - 53 % TS), sie sind rieselfähig und mechanisch belastbar.

Der Heizwert dieser Rohgranulate beträgt 10 - 14 MJ/kg und entspricht damit dem Heizwert von getrocknetem reinen Klärschlamm. Sie können überraschenderweise ohne weitere Trocknungsmaßnahmen direkt über Dosiereinrichtungen einer Wirbelschicht aufgegeben und dort selbstgängig verbrannt werden, wie das nachfolgende Beispiel ausweist.

Beispiel 10

Verbrennungsversuche mit feuchten Brennstoffgranulaten (47 % $H_2O$)

Aus einer Mischung von kommunalem Klärschlamm und Braunkohlenstaub hergestellte feuchte Brennstoffgranulate wurden einer stationären Wirbelschicht-Brennkammer mit einer thermischen Leistung von 300 kW als alleiniger Brennstoff aufgegeben. Bei diesen Versuchen wurden etwa 5 t Rohgranulat kontinuierlich verbrannt.

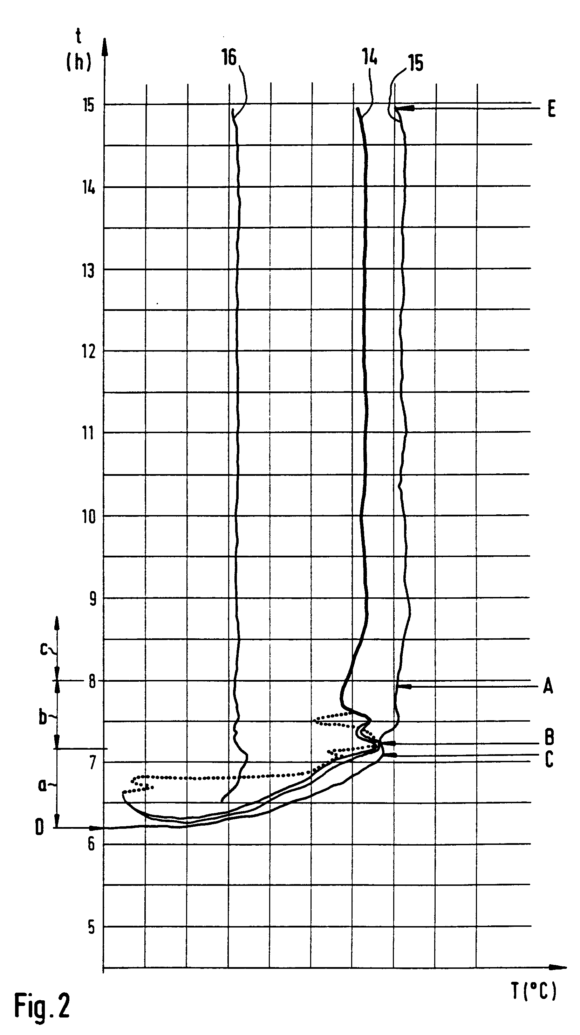

Fig. 2 zeigt beispielhaft die Temperaturverläufe während des Versuchs in Abhängigkeit von der Zeit, wobei die Ziffern die Zahl der Stunden (h) angeben, in der Wirbelschicht (Wirbelbett-Temperatur 14), im darüber angeordnetem Freiraum (Freiraum-Temperatur 15) und vor dem nachgeschalteten Zyklon (Zyklon-Temperatur 16). Während der Anfahrphase oder Aufheizphase a, die vom Zeitpunkt D, Einschalten des Aufheizbrenners, bis zum Zeitpunkt B andauert, Ausschalten des Aufheizbrenners, steigen die Temperaturen im Wirbelbett und im Freiraum etwa gleichmäßig an. Gegen Ende der Aufheizphase a wird zum Zeitpunkt C mit der Brennstoffaufgabe in die Wirbelschicht begonnen. Nach dem Ausschalten des Aufheizbrenners (Zeitpunkt B) beginnt die Stabilisierungsphase b, die bis zum Zeitpunkt A (Sekundärluftzugabe "ein") andauert. Überraschenderweise hat sich im Wirbelbett nach dem Ausschalten des Aufheizbrenners der Verbrennungsvorgang allein aus den zugegebenen feuchten Brennstoffgranulaten selbstgängig getragen und sich bis zum Zeitpunkt A (Sekundärluftzugabe "ein") stabilisiert, so daß von dort an bis zum Versuchsende (Zeitpunkt E) eine sehr stabile Verbrennungsphase c vorgelegen hat, in der nur noch sehr geringe Temperaturschwankungen angezeigt worden sind. Deutlich ist zu erkennen, daß diese Temperaturverläufe vom Zeitpunkt A an, an dem die Sekundärluftzugabe eingeschaltet wurde, bis zum Versuchsende E sehr gleichmäßig waren. Die fast geradlinigen Kurvenverläufe verdeutlichen, daß die Zudosierung der feuchten Brennstoffgranulate ebenfalls sehr gleichmäßig erfolgt ist. Weiterhin kann daraus abgeleitet werden, daß der Abbrand intensiv und gleichmäßig verlief.

Nachstehend sind in Tabelle 1 eine Elementaranalyse und in Tabelle 2 weitere Kenndaten der verwendeten feuchten Brennstoffgranulate zusammengestellt.

## Tabelle 1

## Elementaranalyse der feuchten Brennstoffgranulate

**Wasser gesamt      47 %**

**Trockenrückstand    53 %**

|  |  | i.an.*) | wf | waf |
|---|---|---|---|---|
| Wasser | % | 0,6 | – | – |
| Asche | % | 14,8 | 14,9 | – |
| C | % | 53,3 | 53,6 | 63,0 |
| H | % | 4,46 | 4,49 | 5,28 |
| N | % | 1,38 | 1,39 | 1,63 |
| O | % | 24,5 | 24,6 | 28,9 |
| S | % | 0,99 | 1,0 | – |

**\*) analysenfeucht**

Tabelle 2

| Kenndaten des Rohgranulates | | |
|---|---|---|
| Heizwert des Brennstoffgranulates | (feucht) (wf) | 10,2 MJ/kg 21,4 MJ/kg |
| Schüttgewicht | | 0,5 kg/dm$^3$ |
| CaO-Gehalt | | 2,44 Gew.-% |

Bei einer fast konstanten Wirbelschichtverbrennungstemperatur in der Verbrennungsphase c von 720 bis 740 °C und einer sich entsprechend einstellenden Freiraumtemperatur von 840 - 870 °C ergaben sich unter Zugabe von Sekundärluft die in Tabelle 3 niedergelegten Emissionswerte.

Tabelle 3

| Emissionswerte | |
|---|---|
| CO | 35 - 40 mg/m$^3$ |
| NO$_x$ | 80 - 130 mg/m$^3$ |
| NO$_2$ | 5 - 15 mg/m$^3$ |

EP 0 579 657 B1

Am nachgeschalteten Zyklon entnommene Feststoffproben bestätigten, daß ein genügend hoher Ausbrand der feuchten Brennstoffgranulate sichergestellt war. Die Kohlenstoffgehalte in den Ascheproben lagen zwischen C = 2,7 Gew.-% und 3,7 Gew.-%.

**BEZUGSZEICHENLISTE**

| 1 | Granuliermischer |
| 2 | Dünnschlammbehälter |
| 3 | Flockung und Filtration |
| 4 | Schwerkraftentwässerung |
| 5 | Schlammteich |
| 6 | Umluftsilo |
| 7 | Turmrieseltrockner |
| 8 | Trommeltrockner |
| 9 | Braunkohlenstaub |
| 10 | Branntkalk |
| 11 | Klärschlamm |
| 12 | feuchte Brennstoffgranulate |
| 13 | trockene Brennstoffgranulate |
| 14 | Wirbelbett-Temperatur |
| 15 | Freiraum-Temperatur |
| 16 | Zyklon-Temperatur |
| A | Sekundärluftzugabe "ein" |
| B | Aufheizbrenner "aus" |
| C | Brennstoffaufgabe "ein" |
| D | Aufheizbrenner "ein" |
| E | Versuchsende |
| a | Anfahrphase bzw. Aufheizphase |
| b | Stabilisierungsphase |
| c | stabile Verbrennungsphase |

**Patentansprüche**

1. Brennstoffgranulate aus Klärschlamm, insbesondere für Wirbelschichtfeuerungen, **dadurch gekennzeichnet, daß** die Brennstoffgranulate folgende Zusammensetzung aufweisen:
a) 0,4 bis 45 Gew.-% Klärschlamm-Trockensubstanz,
b) 83,74 bis 29 Gew.-% Kohlenstaub (w.f.),
c) 5,4 bis 1 Gew.-% Branntkalk,
d) $\leq$ 47 Gew.-% Restwasser,
e) eine rundliche Korngröße zwischen 0 und 7 mm, einen Mehlkornanteil < 1 % und eine rieselfähige Konsistenz haben sowie
f) in einem einzigen Verfahrensschritt in einem Granuliermischer hergestellt sind.

2. Brennstoffgranulate nach Anspruch 1, **dadurch gekennzeichnet, daß** sie folgende Kornverteilung haben:
von 0 bis 0,63 mm = 0,4 %
0,63 bis 1,0 mm = 32,3 %
1,0 bis 2,0 mm = 46,9 %
2,0 bis 4,0 mm = 19,8 %
> 4,0 mm = 0,6 %

3. Verfahren zur Herstellung von Brennstoffgranulaten nach einem der Ansprüche 1 oder 2, **dadurch gekennzeichnet, daß** 0,8 kg - 1,4 kg kommunaler Klärschlamm (Dünnschlamm) mit 1,5 - 8,0 % Trockensubstanz, 2,0 kg Braunkohlenstaub mit 10 - 20 % Wassergehalt und 0,10 kg Branntkalk in einem Granuliermischer zu rundlichen, rieselfähigen feuchten Brennstoffgranulaten mit 35 - 47 % Wassergehalt und quasitrockener, rieselfähiger Konsistenz geformt und diese gegebenenfalls anschließend in 30 - 60 h zu trockenen Brennstoffgranulaten mit einer Restfeuchte von 20 - 10 % luftgetrocknet werden.

7

4. Verfahren zur Herstellung von Brennstoffgranulaten nach Anspruch 3, **dadurch gekennzeichnet, daß** der kommunale Klärschlamm (Dünnschlamm) durch Zugabe von organischen oder anorganischen Flockungsmitteln mittels Schwerkraft auf 15 - 25 % Trockensubstanz vorentwässert wird, 1,2 kg - 1,5 kg des vorentwässerten Klärschlammes, 1,5 kg Braunkohlenstaub mit 10 - 20 % Wassergehalt und 0,05 kg Branntkalk dem Granuliermischer aufgegeben werden.

5. Verfahren zur Herstellung von Brennstoffgranulaten nach Anspruch 3, **dadurch gekennzeichnet, daß** der kommunale Klärschlamm (Dünnschlamm) mit oder ohne Flockungsmittelzugabe maschinell auf 25 - 35 % Trockensubstanz vorentwässert wird, 1,5 kg - 1,8 kg des vorentwässerten Klärschlammes, 1,0 kg Braunkohlenstaub mit 10 - 20 % Wassergehalt und 0,05 kg Branntkalk dem Granuliermischer aufgegeben werden.

6. Verfahren nach Anspruch 3, **dadurch gekennzeichnet, daß** vorentwässerter Klärschlamm in einer Filtrationsstufe unter Verwendung von Steinkohle, Koksabrleb, Holzmehl oder Braunkohle als Filterhilfsmittel im Verhältnis 1:1 gemischt und druckfiltriert wird.

7. Verfahren zur Herstellung von Brennstoffgranulaten nach Anspruch 3, **dadurch gekennzeichnet, daß** der kommunale Klärschlamm (Dünnschlamm) in Schlammteichen auf 20 - 35 % TS eingedickt wird und 1,2 - 1,8 kg des eingedickten Klärschlammes, 1,0 kg Braunkohlenstaub mit 10 - 20 % Wassergehalt und 0,05 kg Branntkalk dem Granuliermischer aufgegeben werden.

8. Verfahren zur Herstellung von Brennstoffgranulaten nach Anspruch 5, **dadurch gekennzeichnet, daß** anstelle von Braunkohlenstaub als Trockenmasse Steinkohlenstaub, Holzmehl oder andere feinteilige kohlenstoffhaltige Trockenmassen verwendet werden.

**Claims**

1. Fuel granules made from sludge, in particular for fluidised bed furnaces, characterised in that the fuel granules have the following composition:
   a) 0.4 to 45 wt.% sludge solids,
   b) 83.74 to 29 wt.% coal dust (dry weight),
   c) 5.4 to 1 wt.% caustic lime,
   d) $\leq$ 47 wt.% residual water,
   e) have a spheroidal grain size between 0 and 7 mm, a flour grain content < 1% and a pourable consistency, and
   f) are manufactured in a single procedural step in a granulating mixer.

2. Fuel granules according to claim 1, characterised in that they have the following grain distribution:
   from 0 to 0.63 mm = 0.4%
   0.63 to 1.0 mm = 32.3 %
   1.0 to 2.0 mm = 46.9 %
   2.0 to 4.0 mm = 19.8 %
   > 4.0 mm = 0.6 %

3. A method of manufacturing fuel granules according to either one of claims 1 and 2, characterised in that 0.8 kg - 1.4 kg municipal sludge (dilute sludge) with 1.5 - 8.0 % solids, 2.0 kg brown-coal dust with a water content of 10 - 20% and 0.10 kg caustic lime are formed, in a granulating mixer, into spheroidal, pourable, moist fuel granules with a water content of 35 - 47% and a quasi-dry pourable consistency and, optionally, these are then air-dried in 30 - 60 h to form dry fuel granules with a residual moisture content of 20 - 10 %.

4. A method of manufacturing fuel granules according to claim 3, characterised in that the municipal sludge (dilute sludge) is predehydrated to 15 - 25 % solids by means of gravity by the addition of organic or inorganic flocculants, and 1.2 kg - 1.5 kg of the predehydrated sludge, 1.5 kg brown-coal dust with a water content of 10 - 20 % and 0.05 kg caustic lime are fed to the granulating mixer.

5. A method of manufacturing fuel granules according to claim 3, characterised in that the municipal sludge (dilute sludge) is mechanically predehydrated to 25 - 35 % solids with or without the addition of flocculants, and 1.5 kg - 1.8 kg of the prehydrated sludge, 1.0 kg brown-coal dust with a water content of 10 - 20 % and 0.05 kg caustic lime are fed to the granulating mixer.

6. A method according to claim 3, characterised in that predehydrated sludge is mixed in a filtration stage using hard coal, coke dust, wood flour or brown coal as a filter aid in a ratio of 1:1 and pressure filtered.

7. A method of manufacturing fuel granules according to claim 3, characterised in that the municipal sludge (dilute sludge) is thickened in sludge lagoons to 20 - 35 % solids, and 1.2 - 1.8 kg of the thickened sludge, 1.0 kg brown-coal dust with a water content of 10 - 20% and 0.05 kg caustic lime are fed to the granulating mixer.

8. A method of manufacturing fuel granules according to claim 5, characterised in that hard-coal dust, wood flour or other fine carbonaceous dry substances are used as a dry substance instead of brown-coal dust.

**Revendications**

1. Granulés de combustible de boues de curage ou de schlamm épaissi, plus particulièrement pour foyers à couche fluidisée, caractérisés en ce que les granulés de combustible présentent la composition suivante :
   a) 0,4 à 45% en poids de substance sèche de boue de curage,
   b) 83,74 à 29% en poids de poussière ou poussier de charbon (exempt d'eau),
   c) 5,4 à 1% en poids de chaux vive,
   d) 47 ou moins de 47% en poids d'eau résiduelle,
   e) une granulométrie ronde entre 0 et 7 mm, une fraction de grains en farine inférieure à 1% et une consistance fluide et
   f) fabriqués en une seule étape opératoire dans un malaxeur de granulation.

2. Granulés de combustible suivant la revendication 1, caractérisés en ce qu'ils possèdent la répartition granulométrique suivante :
   de 0 à 0,63 mm = 0,4%
       0,63 à 1,0 mm = 32,3%
       1,0 à 2,0 mm = 46,9%
       2,0 à 4,0 mm = 19,8%
       > 4,0 mm = 0,6%

3. Procédé de fabrication de granulés de combustible suivant l'une quelconque des revendications 1 et 2, caractérisé en ce que l'on façonne 0,8 kg à 1,4 kg de boues de curage municipales (schlamm fin) avec 1,5 à 8,0% de substance sèche, 2,0 kg de poussière de lignite avec une teneur en eau de 10 à 20% et 0,10 kg de chaux vive dans un malaxeur ou mélangeur de granulation en granulés de combustible ronds, humides et fluides, avec une teneur en eau de 35 à 47% et une consistance quasi sèche, fluide et on sèche ensuite éventuellement ces granules pendant 30 à 60 heures en granules de combustible secs, d'une teneur en humidité résiduelle de 20 à 10%.

4. Procédé de fabrication de granules de combustible suivant la revendication 3, caractérisé en ce que l'on déshydrate au préalable la boue de curage municipale (schlamm fin) par l'addition d'agents de floculation organiques ou inorganiques, à l'aide d'une force de cisaillement jusqu'à 15 à 25% de substance sèche, on introduit 1,2 kg à 1,5 kg de la boue de curage prédéshydratée, 1,5 kg de poussière de lignite d'une teneur en eau de 10 à 20% et 0,05 kg de chaux vive dans le mélangeur ou malaxeur de granulation.

5. Procédé de fabrication de granulés de combustible suivant la revendication 3, caractérisé en ce que l'on déshydrate au préalable la boue de curage municipale (schlamm fin) avec ou sans addition d'agent de floculation en machine jusqu'à 25 à 35% de substance sèche, on introduit 1,5 kg à 1,8 kg de la boue de curage prédéshydratée, 1,0 kg de poussière de lignite avec une teneur en eau de 10 à 20% et 0,05 kg de chaux vive dans le mélangeur ou malaxeur de granulation.

6. Procédé suivant la revendication 3, caractérisé en ce que l'on mélange la boue de curage prédéshydratée au cours d'une étape de filtration en recourant à l'emploi de charbon de terre, de produit d'abrasion de coke, de farine de bois, ou de lignite servant d'adjuvant de filtration, dans le rapport de 1:1 et on filtre le tout sous pression.

7. Procédé de fabrication de granulés de combustible suivant la revendication 3, caractérisé en ce que l'on épaissit la boue de curage municipale (schlamm fin) en particules de schlamm jusqu'à 20 à 35% de substance sèche (S.S.) et on introduit 1,2 à 1,8 kg de la boue de curage épaissie, 1,0 kg de poussière de lignite avec une teneur en eau de 10 à 20% et 0,05 kg de chaux vive dans le mélangeur ou malaxeur de granulation.

8. Procédé de fabrication de granulés de combustible suivant la revendication 5, caractérisé en ce qu'au lieu de poussière de lignite à titre de masse sèche, on utilise de la poussière de charbon de terre, de la farine de bois ou d'autres masses sèches contenant du carbone, en fines particules.

Fig. 1

Fig.2